# DEMANDE DE BREVET EUROPEEN

(11) **EP 1 437 248 A1**
(43) Date de publication de la demande: **14.07.2004**
(21) Numéro de dépôt: 03293323.6
(22) Date de dépôt: 24.12.2003
(51) Int. Cl.: B60J 7/04, B60J 7/047, B60J 7/14

(54) **Dispositif de guidage d'un ouvrant coulissant, ouvrant et véhicule automobile pourvu d'un dispositif**

(30) Priorité: 08.01.2003 FR 0300130
(71) Demandeur: Peugeot Citroen Automobiles SA, 78140 Vélizy Villacoublay (FR)
(72) Inventeur: Guinois, Pascal, 91680 Bruyères le Chatel (FR)
(74) Mandataire: Robert, Jean-François

(57) **Abrégé**

L'invention concerne un dispositif de guidage d'un ouvrant (1) coulissant, par exemple pour véhicule automobile, du type comprenant des lamelles (11 ; 12) articulées déplaçables entre une position de fermeture d'une ouverture et une position de libération de ladite ouverture, une partie au moins des lamelles devant transiter lors de ce déplacement dans une zone incurvée (2) en partie haute de l'ouverture. Selon l'invention, chaque glissière (3) latérale de l'ouverture, dans laquelle se déplacent les lamelles, comporte un premier (31) et un second (32) flans encadrant les lamelles (11 ; 12), dont l'écartement est supérieur dans la zone incurvée (2) pour autoriser le passage de lamelles sensiblement planes (11) dans ladite zone incurvée (2), des moyens de guidage étant prévus pour plaquer au moins une lamelle (11 ; 12) de l'ouvrant contre l'un au moins des flans dans la zone incurvée (2), lorsque les lamelles (11 ; 12) sont dans leur position de fermeture.

## Description

La présente invention concerne un ouvrant coulissant, notamment pour véhicule automobile.

L'invention se rapporte plus précisément à un dispositif de guidage d'un ouvrant coulissant, par exemple pour véhicule automobile, du type comprenant des lamelles articulées déplaçables entre une position de fermeture d'une ouverture et une position de libération de ladite ouverture, une partie au moins des lamelles devant transiter lors de ce déplacement dans une zone incurvée en partie haute de l'ouverture.

Un ouvrant coulissant conforme à la description générique qu'en donne le préambule ci-dessus présente généralement un interstice entre les lamelles supérieures de l'ouvrant se trouvant en position de fermeture et le bord supérieur de l'ouverture. La raison en est la suivante : des lamelles plates et de largeurs non négligeables de l'ouvrant doivent transiter dans une zone incurvée en partie haute de l'ouverture, afin de s'escamoter dans un logement prévu à cet effet. Les glissières latérales dans lesquelles coulissent de telles lamelles doivent donc présenter un rayon de courbure et un écartement relatif entre les flans encadrant les lamelles dans la zone incurvée, qui soient adaptés à leur passage. Or lorsque les lamelles sont dans leur position de fermeture, la lamelle ou les lamelles se trouvant dans la partie supérieure de l'ouvrant sont insuffisamment guidées entre les flans de chaque glissière pour être plaquées contre l'un des flans de la glissière, par exemple contre le flan extérieur encadrant les lamelles.

Ainsi, l'écart entre la lamelle supérieure de l'ouvrant et le bord supérieur de l'ouverture ne permet pas de garantir une étanchéité parfaite de l'ouvrant dans sa position de fermeture et dégrade significativement le style extérieur d'un véhicule pourvu d'un tel ouvrant.

Le but de la présente invention est de pallier les inconvénients ci-dessus.

A cet effet, l'invention a pour objet un dispositif de guidage d'un ouvrant coulissant, par exemple pour véhicule automobile, du type comprenant des lamelles articulées déplaçables entre une position de fermeture d'une ouverture et une position de libération de ladite ouverture, une partie au moins des lamelles devant transiter lors de ce déplacement dans une zone incurvée en partie haute de l'ouverture, caractérisé en ce que chaque glissière latérale de l'ouverture, dans laquelle se déplacent les lamelles, comporte un premier et un second flans encadrant les lamelles, dont l'écartement est supérieur dans la zone incurvée pour autoriser le passage de lamelles sensiblement planes dans ladite zone incurvée, des moyens de guidage étant prévus pour plaquer au moins une lamelle de l'ouvrant contre l'un au moins des flans de la glissière dans la zone incurvée, lorsque les lamelles sont dans leur position de fermeture.

L'invention peut également comporter une ou plusieurs des caractéristiques suivantes :
- les moyens de guidage comportent une biellette articulée sur un bord latéral de l'ouverture, dont l'extrémité libre est conformée pour s'embrayer avec des moyens d'entraînement solidaires d'une lamelle d'entraînement lors du déplacement de cette dernière vers sa position de fermeture, provoquant la rotation de la biellette autour de son articulation, la biellette étant pourvue d'une surface d'appui destinée à repousser au moins une lamelle de l'ouvrant contre le premier flan de la glissière, correspondant au flan extérieur de la glissière dans la zone incurvée,
- les moyens d'entraînement sont constitués d'un doigt faisant saillie latéralement par rapport au bord de la lamelle d'entraînement se trouvant à l'extrémité supérieure de l'ouvrant,
- l'extrémité libre de la biellette comporte au moins une rampe destinée à guider le doigt vers une position d'embrayage ménagée sur la biellette, lors du déplacement de la lamelle d'entraînement vers sa position de fermeture, afin d'entraîner la biellette en rotation autour de son articulation,
- la biellette est constituée d'un corps principal allongé sensiblement plat s'étendant perpendiculairement à son axe d'articulation, ce corps principal étant prolongé à l'extrémité libre de la biellette par une zone sensiblement plate en décrochement latéral vers l'extérieur de l'ouverture, destinée à coopérer avec les moyens d'entraînement,
- la surface d'appui est formée par un bossage oblong s'étendant sur la tranche du corps principal,
- la biellette est située dans un logement ménagé sur le bord latéral de l'ouverture, ce logement étant délimité par une surface d'appui permettant de supporter la biellette lorsque celle-ci n'est pas embrayée avec les moyens d'entraînement.

L'invention a également pour objet un ouvrant coulissant comportant un dispositif de guidage ayant les caractéristiques indiquées précédemment, ainsi qu'un véhicule automobile comportant un tel dispositif de guidage.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique montrant le côté d'un ouvrant coulissant suivant l'invention, limitée à la zone incurvée située en partie supérieure de l'ouverture,
- les figures 2 et 3 sont des vues schématiques montrant le côté d'un ouvrant coulissant et son dispositif de guidage suivant l'invention, limitées à la zone incurvée située en partie supérieure de l'ouverture, les moyens de guidage étant représentés respectivement en position débrayée et embrayée,
- la figure 4 est une section partielle suivant la ligne de coupe A-A de l'ouvrant et de son dispositif de guidage de la figure 3,
- la figure 5 est une section partielle suivant la ligne de coupe B-B de l'ouvrant et de son dispositif de guidage de la figure 3, et
- la figure 6 est une vue partielle en perspective de l'ouvrant et de la biellette des figures 2 et 3.

L'invention se rapporte à un dispositif de guidage d'un ouvrant coulissant. Dans une application particulière qui nous intéresse ici, un tel ouvrant peut être adapté à un véhicule automobile, par exemple pour fermer l'ouverture arrière du véhicule, donnant accès à un espace de chargement.

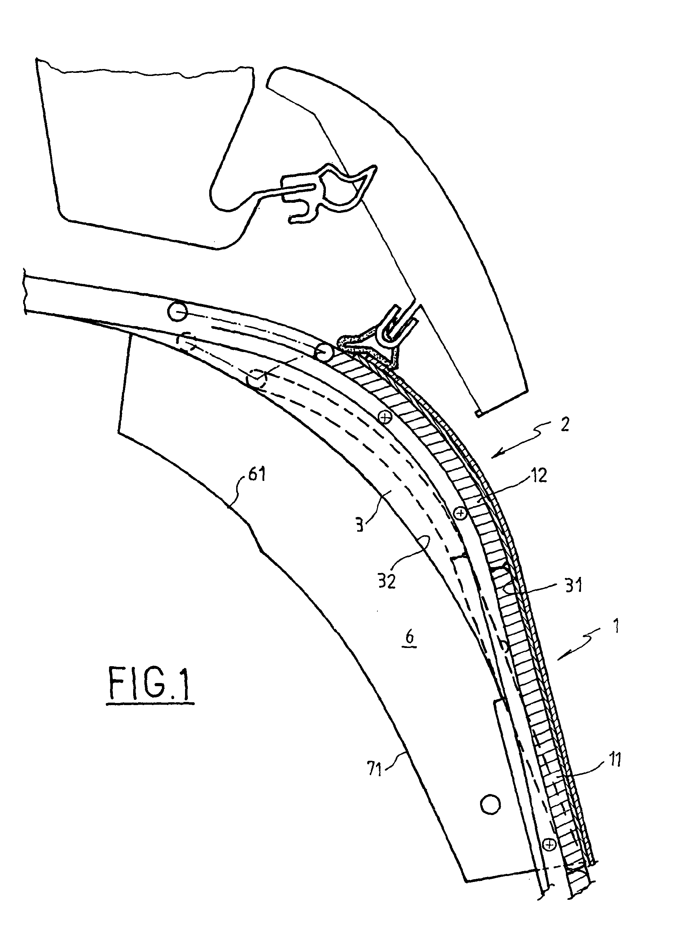

On a représenté à la figure 1 la partie supérieure de l'ouvrant 1, dans la zone incurvée 2 par laquelle les lamelles de l'ouvrant 1 transitent pour passer de leur position de fermeture à leur position de libération de l'ouverture.

Un tel ouvrant 1 coulissant peut être réalisé à partir d'un matériau semi-rigide se forme sensiblement plate. Pour que cet ouvrant 1 puisse transiter par la zone incurvée, de manière à épouser le galbe du véhicule, l'ouvrant 1 subit une opération de conformation sur ses deux côtés latéraux. Pendant cette opération, des lignes droites et parallèles sont créées par écrasement de la matière pour constituer des charnières.

Cependant, entre chaque charnière il subsiste des zones rigides constituant des lamelles 11, 12, qui doivent transiter par la zone incurvée 2. Lorsque l'ouvrant 1 se déplace entre ses positions de fermeture et d'ouverture, les lamelles rigides 11, 12 se déplacent dans des glissières 3 latérales de l'ouverture. Chaque glissière 3 étant constituée, pour encadrer les lamelles 11, 12, d'un premier 31 et d'un second 32 flans en vis-à-vis l'un de l'autre, on comprendra que ces flans 31 et 32 doivent présenter un écartement dans la zone incurvée 2 qui permette un débattement des lamelles 11, 12 lors de leur passage dans cette zone 2. De ce fait, l'écartement des flans 31, 32 doit être supérieur dans cette zone incurvée 2 à celui du reste de la glissière 3, correspondant notamment à la zone de coulissement sensiblement verticale de l'ouvrant 1.

Cet écartement des flans 31 et 32 dans la zone incurvée 2 engendre un guidage imprécis et un maintien approximatif des lamelles 11, 12 situées en partie supérieure de l'ouvrant 1 lorsque celui-ci est dans sa position de fermeture.

A la figure 1, on constate en effet que l'ouvrant 1 dans sa position fermée est libre à son extrémité supérieure entre deux positions extrêmes, représentées en traits pointillés et en traits pleins.

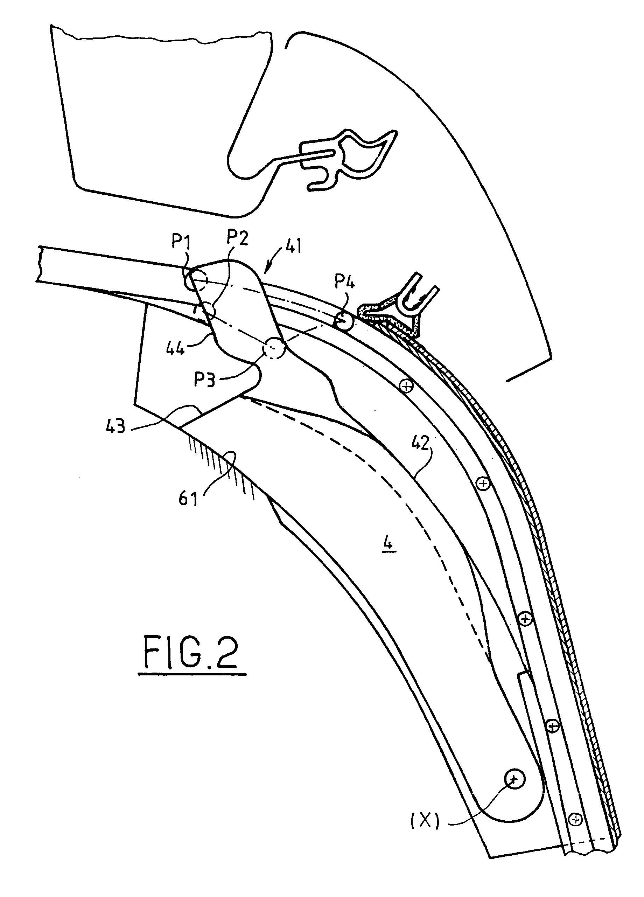

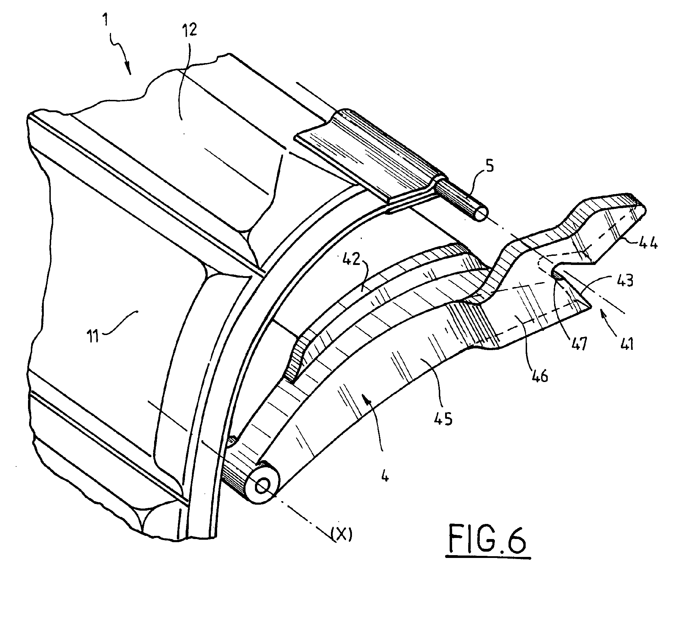

Suivant l'invention, comme cela est représenté aux figures 2, 3 et 6, des moyens de guidage sont prévus pour plaquer la dernière lamelle 12 du bord supérieur de l'ouvrant 1, contre le premier flan 31 de la glissière 3, lorsque cette lamelle 12 est déplacée vers sa position de fermeture. Le premier flan 31 correspond en fait au flan extérieur de la glissière 3, par rapport à la courbe empreintée par cette dernière 3 dans la zone incurvée.

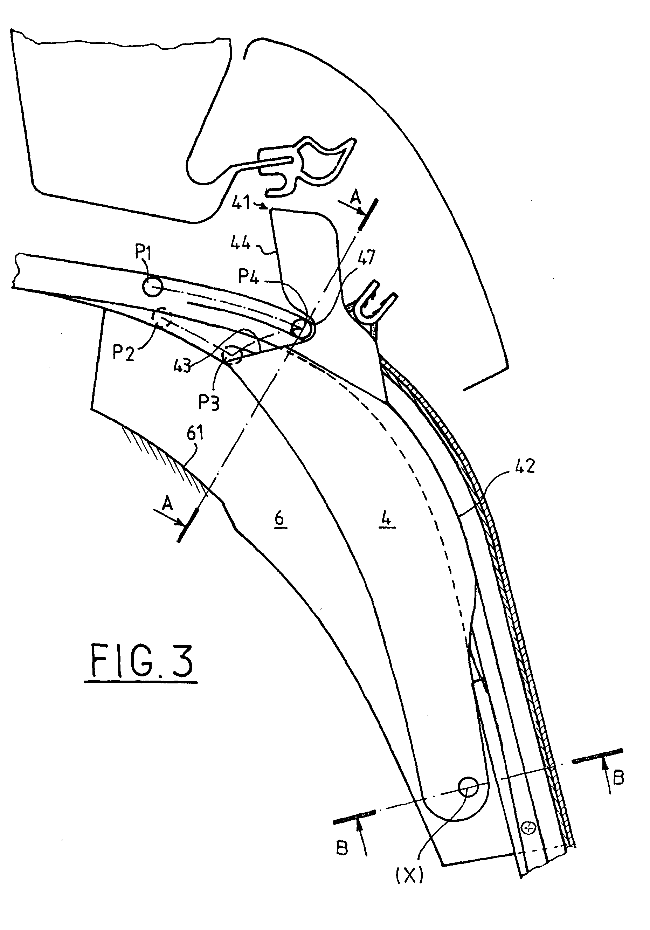

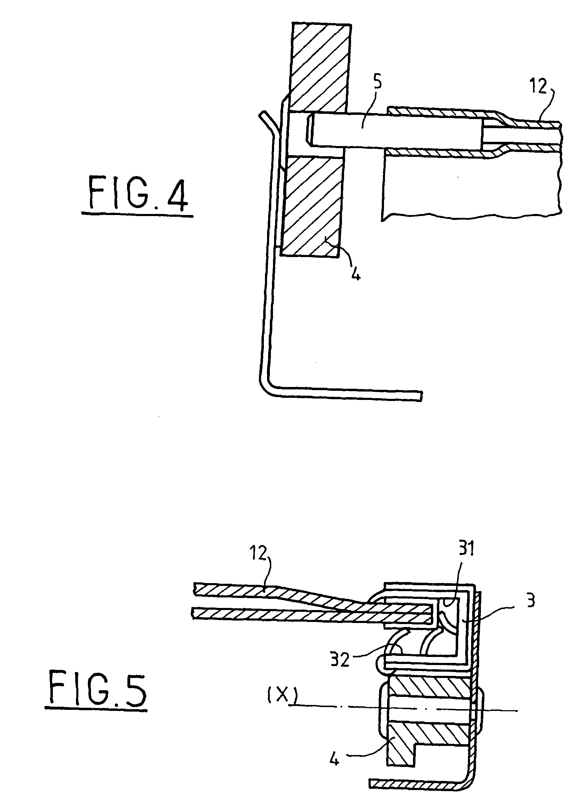

Les moyens de guidage destinés à plaquer la lamelle 12 comportent une biellette 4 articulée à son extrémité inférieure autour d'un axe (X) sur un bord latéral de l'ouverture (figures 3 et 5).

A son extrémité libre 41, la biellette 4 comporte deux rampes 43, 44 destinées à coopérer avec des moyens d'entraînement 5 solidaires d'une lamelle d'entraînement (figures 2, 3 et 6). Dans un mode de réalisation particulier de l'invention, cette lamelle d'entraînement constitue la dernière lamelle du bord supérieur de l'ouvrant 1, c'est à dire la lamelle 12 destinée à être plaquée contre le premier flan 31 de la glissière 3. Toutefois, on comprendra que dans une variante de réalisation non représentée de l'invention, la lamelle d'entraînement pourra être distincte de la lamelle 12 d'extrémité supérieure de l'ouvrant 1.

Comme le montrent les figures 3, 4 et 6, les moyens d'entraînement sont constitués d'un doigt 5 faisant saillie latéralement par rapport au bord de la lamelle d'entraînement 12. Lors du déplacement de cette lamelle 12 vers sa position de fermeture, le doigt 5 est guidé par les rampes 43, 44 vers une position d'embrayage 47 ménagée sur la biellette 4, de façon que le déplacement de la lamelle d'entraînement 12 vers sa position de fermeture entraîne incidemment la biellette 4 en rotation autour de son axe X.

En se référant à la figure 3, on notera que le doigt 5 peut occuper différentes positions comprises dans l'espace P1, P2, P3, P4 avant d'arriver à sa position finale P4 correspondant au plaquage de la lamelle 12 contre le premier flan 31 de la glissière 3.

Les moyens permettant ce plaquage sont décrits ci-après. La biellette 4 est constituée d'un corps principal 45 sensiblement plat s'étendant perpendiculairement à son axe d'articulation (X). L'extrémité libre 41 de la biellette 4, sur laquelle sont prévues les rampes 43, 44, forme une zone plate 46 présentant un décrochement latéral par rapport au corps principal 45, de sorte que le corps principal 45 soit disposé en vis à vis de la lamelle 12 à plaquer contre le premier flan 31 de la glissière 3, tandis que la zone plane 46 de l'extrémité libre de la biellette 4 est décalée latéralement par rapport au bord de la lamelle 12 de façon à coopérer avec le doigt 5 comme cela a été décrit précédemment.

Comme cela est visible aux figures 2, 3 et 6, le corps principal 45 comporte sur sa tranche un bossage oblong formant une surface d'appui 42 destinée à repousser la lamelle 12 contre le premier flan 31 de la glissière 3.

On notera que les lamelles 11, 12 fermant l'ouverture dans sa zone incurvée 2 peuvent avoir des formes incurvées de manière à épouser la forme incurvée du premier flan 31 de la glissière 3. On comprendra donc que la surface d'appui 42 pourra également avoir une forme incurvée épousant la face intérieure de la lamelle 12. Le plaquage de la lamelle 12 contre le premier flan 31 de la glissière 3 en sera d'autant plus précis et la répartition des efforts visant à maintenir cette lamelle 12 en position en sera d'autant meilleure.

Bien entendu l'invention n'est pas limitée aux moyens qui sont décrits précédemment et comprend tous les équivalents techniques.

## Revendications

1. Dispositif de guidage d'un ouvrant (1) coulissant, par exemple pour véhicule automobile, du type comprenant des lamelles (11 ; 12) articulées déplaçables entre une position de fermeture d'une ouverture et une position de libération de ladite ouverture, une partie au moins des lamelles devant transiter lors de ce déplacement dans une zone incurvée (2) en partie haute de l'ouverture, **caractérisé en ce que** chaque glissière (3) latérale de l'ouverture, dans laquelle se déplacent les lamelles, comporte un premier (31) et un second (32) flans encadrant les lamelles (11 ; 12), dont l'écartement est supérieur dans la zone incurvée (2) pour autoriser le passage de lamelles sensiblement planes (11) dans ladite zone incurvée (2), des moyens de guidage étant prévus pour plaquer au moins une lamelle (11 ; 12) de l'ouvrant contre l'un au moins des flans dans la zone incurvée (2), lorsque les lamelles (11 ; 12) sont dans leur position de fermeture.

2. Dispositif de guidage selon la revendication 1, **caractérisé en ce que** les moyens de guidage comportent une biellette (4) articulée sur un bord latéral de l'ouverture, dont l'extrémité libre (41) est conformée pour s'embrayer avec des moyens d'entraînement (5) solidaires d'une lamelle d'entraînement (12) lors du déplacement de cette dernière (12) vers sa position de fermeture, provoquant la rotation de la biellette (4) autour de son articulation (X), la biellette (4) étant pourvue d'une surface d'appui (42) destinée à repousser au moins une lamelle (12) de l'ouvrant (1) contre le premier flan (31) de la glissière (3), correspondant au flan extérieur de la glissière (3) dans la zone incurvée (2).

3. Dispositif de guidage selon la revendication 2, **caractérisé en ce que** les moyens d'entraînement (5) sont constitués d'un doigt (5) faisant saillie latéralement par rapport au bord de la lamelle d'entraînement (12) se trouvant à l'extrémité supérieure de l'ouvrant (1).

4. Dispositif de guidage selon la revendication 3, **caractérisé en ce que** l'extrémité libre (41) de la biellette (4) comporte au moins une rampe (43 ; 44) destinée à guider le doigt (5) vers une position d'embrayage (47) ménagée sur la biellette (4), lors du déplacement de la lamelle d'entraînement (12) vers sa position de fermeture, afin d'entraîner la biellette (4) en rotation autour de son articulation (X).

5. Dispositif de guidage selon la revendication 3 ou 4, **caractérisé en ce que** la biellette (4) est constituée d'un corps principal (45) allongé sensiblement plat s'étendant perpendiculairement à son axe d'articulation, ce corps principal (45) étant prolongé à l'extrémité libre (41) de la biellette (4) par une zone (46) sensiblement plate en décrochement latéral vers l'extérieur de l'ouverture, destinée à coopérer avec les moyens d'entraînement (5).

6. Dispositif de guidage selon la revendication 5, **caractérisé en ce que** la surface d'appui (42) est formée par un bossage oblong s'étendant sur la tranche du corps principal (45).

7. Dispositif de guidage selon l'une quelconque des revendications 2 à 6, **caractérisé en ce que** la biellette (4) est située dans un logement (6) ménagé sur le bord latéral de l'ouverture, ce logement (6) étant délimité par une surface d'appui (61) permettant de supporter la biellette (4) lorsque celle-ci n'est pas embrayée avec les moyens d'entraînement (5).

8. Ouvrant (1) coulissant **caractérisé en ce qu'**il comporte un dispositif de guidage selon l'une quelconque des revendications précédentes.

9. Véhicule automobile pourvu d'un ouvrant (1) coulissant, **caractérisé en ce qu'**il comporte un dispositif de guidage selon l'une quelconque des revendications précédentes.
